(19) Europäisches Patentamt
European Patent Office
Office européen des brevets

(11) Veröffentlichungsnummer : **0 109 600**
**B1**

(12) # EUROPÄISCHE PATENTSCHRIFT

(45) Veröffentlichungstag der Patentschrift : **12.02.86**

(51) Int. Cl.⁴ : **C 07 F 9/24**, C 07 F 9/173, A 01 N 57/14, A 01 N 57/30

(21) Anmeldenummer : **83111082.0**

(22) Anmeldetag : **07.11.83**

(54) **3-Chlor-3-Phenylprop-2-enylthiophosphorsäureester, Verfahren zu ihrer Herstellung und ihre Verwendung zur Bekämpfung von Schädlingen.**

(30) Priorität : **16.11.82 DE 3242281**

(43) Veröffentlichungstag der Anmeldung : **30.05.84 Patentblatt 84/22**

(45) Bekanntmachung des Hinweises auf die Patenterteilung : **12.02.86 Patentblatt 86/07**

(84) Benannte Vertragsstaaten : **AT BE CH DE FR GB IT LI NL**

(56) Entgegenhaltungen :
**DE-A- 1 567 092**
**DE-A- 1 642 329**
**DE-A- 2 263 816**

(73) Patentinhaber : **BASF Aktiengesellschaft**
**Carl-Bosch-Strasse 38**
**D-6700 Ludwigshafen (DE)**

(72) Erfinder : **Baumann, Annegrit, Dr.**
**Im Sennteich 26**
**D-6800 Mannheim 24 (DE)**
Erfinder : **Kiehs, Karl, Dr.**
**Sudetenstrasse 22**
**D-6840 Lampertheim 1 (DE)**
Erfinder : **Adolphi, Heinrich, Dr.**
**Kalmitweg 11**
**D-6703 Limburgerhof (DE)**

**EP 0 109 600 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft 3-Chlor-3-phenylprop-2-enylthiophosphorsäureester mit vorzugsweise insektizider und akarizider Wirkung, ein Verfahren zu ihrer Herstellung und ihre Verwendung zur Bekämpfung von Insekten und Spinnmilben.

Olefinisch ungesättigte, Halogene und Phenolestergruppierungen enthaltende Phosphorsäureester sind beispielsweise aus den DE-OSen 1 567 092, 2 411 809 und 2 834 505 bekannt.

Es wurde gefunden, daß 3-Chlor-3-phenylprop-2-enylthiophosphorsäureester der Formel I

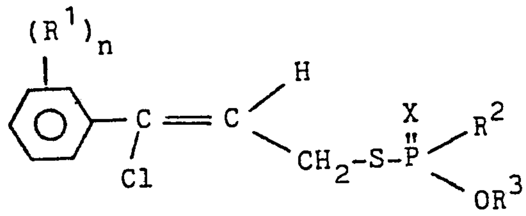

(I)

in der

$R^1$ Wasserstoff oder bis zu 4 (= n) gleiche oder verschiedene Substituenten, nämlich ein Fluor-, Chlor- oder Bromatom, einen geradkettigen oder verzweigten Alkylrest mit bis zu 5 C-Atomen, einen Alkoxyrest mit bis zu 3 C-Atomen oder einen Alkylthiorest mit bis zu 3 C-Atomen,

$R^2$ einen Alkoxy-, Alkylthio- oder Alkylaminorest mit jeweils geradkettigem oder verzweigtem Alkylsubstituenten einer C-Atomzahl von bis zu 5,

$R^3$ einen Alkylrest mit bis zu 3 C-Atomen und

X ein Sauerstoff- oder Schwefelatom bedeuten,

insektizid und vorzugsweise akarizid besonders wirksam und den bekannten, bereits gut wirksamen ähnlichen Wirkstoffen überlegen sind.

Die Vorprodukte für die neuen Phosphorsäureester können nach den Angaben in J. Chem. Soc. C 1970, S. 2484 und Ber. 98, 1965, S. 3554 hergestellt werden ; die nachstehenden Gleichungen (1) bis (3) liefern das benötigte Vorprodukt (II) und können mit den üblichen fachmännischen Mitteln in technische Verfahren umgesetzt werden. Die Umsetzung des Vorprodukts (II), eines 1-Phenyl-1,3-dichlorpropens mit einem — bekannten — thio- oder dithiophosphorsauren Salz (III) liefert den Wirkstoff (I)

(1)

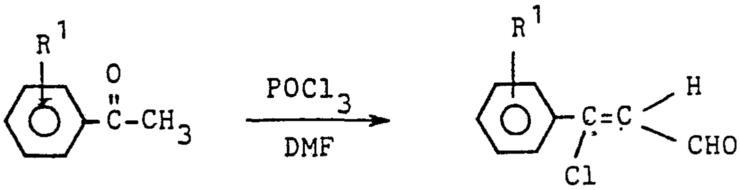


(2)

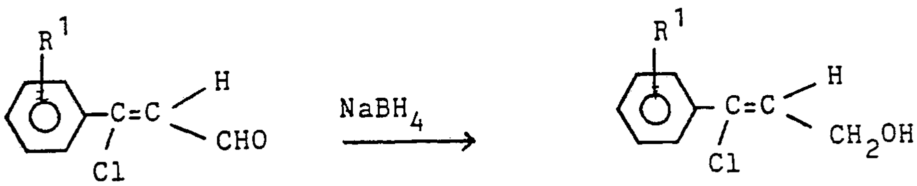


(3)

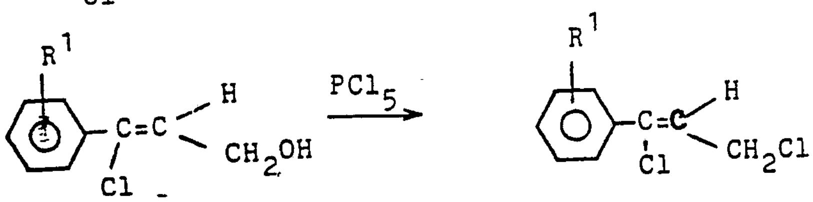


(II)

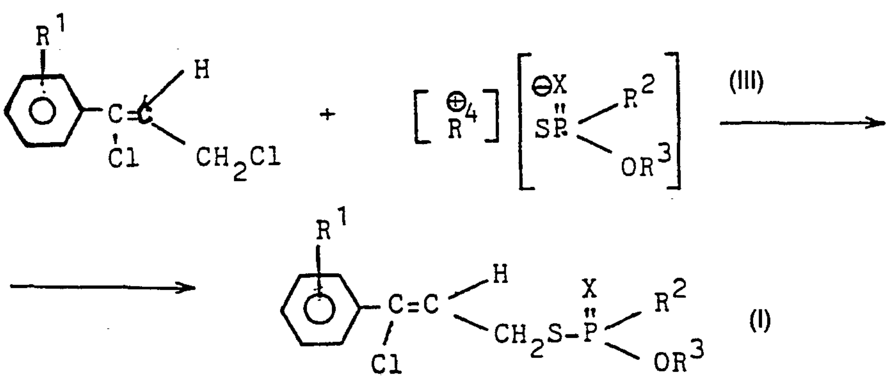

Die Salze der Formel III sind bekannte Verbindungen. Ihre Herstellung ist z. B. in Houben-Weyl, Methoden der org. Chemie, 4. Auflage, Bd. 12/2, S. 690 beschrieben.

Als Kationen dieser Salze kommen außer dem Ammoniumion substituierte Ammoniumionen, z. B. Dimethylammoniumion, Diethylammoniumion oder ein Alkalimetallion, z. B. Na oder K, in Betracht.

Die Umsetzungen werden in den üblichen Lösungsmitteln vorgenommen, z. B. in aliphatischen und aromatischen, gegebenenfalls chlorierten oder nitrierten Kohlenwasserstoffen wie Benzol, Toluol, Xylol, Chlorbenzol, Chloroform, Methylenchlorid, Tetrachlorkohlenstoff, ferner cyclischen oder acyclischen Ethern wie Tetrahydrofuran oder Diethylether, Ketonen wie Aceton, Cyclohexanon, Nitrilen wie Acetonitril. Auch Gemische können verwendet werden. In manchen Fällen ist zweiphasige Arbeitsweise empfehlenswert ; dabei werden Wasser und ein mit Wasser nicht mischbares Lösungsmittel wie Xylol, Toluol, Methyl-t-butylether eventuell mit Zusatz eines Phasentransferkatalysators wie eines Kronenethers oder quartären Ammoniumsalzes verwendet.

Eine ausreichende Reaktionsgeschwindigkeit wird im allgemeinen unter 100 °C, bevorzugt bei 40 bis 60 °C erzielt, wobei gegebenenfalls der Kochpunkt des Solvens die Temperatur begrenzt.

Die folgenden Herstellvorschriften beziehen sich auf Vorprodukte der erfindungsgemäßen Wirkstoffe.

Herstellvorschrift A

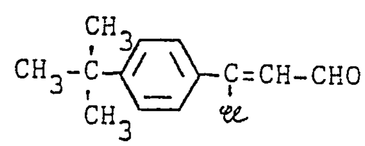

Zu 59 g (0,38 Mol) Phosphorylchlorid tropft man bei 20 bis 30 °C innerhalb von 30 Minuten 59 ml Dimethylformamid. Nach Kühlung auf − 5 bis + 5 °C werden tropfenweise 51,8 g (0,29 Mol) 4-tert.-Butylacetophenon zugetropft. Nach Entfernung des Kühlbades steigt die Temperatur auf 55 bis 60 °C an, man rührt 3 Std. bei gleicher Temperatur nach und gießt anschließend auf Eis. Das Produkt wird mit Methylenchlorid ausgeschüttelt, die organische Phase wird mit 10 %iger Natriumbicarbonatlösung gewaschen. Nach dem Trocknen und Einengen erhält man 61,2 g eines dickflüssigen Öls, $n_D^{25}$ : 1,587 8.

Herstellvorschrift B

60,3 g (0,27 Mol) des Produktes aus Herstellvorschrift A werden in 350 ml Ethylenglykoldimethylether gelöst und bei 20 bis 30 °C mit einer Lösung von 5,15 g (0,135 Mol) Natriumborhydrid in 100 ml Wasser versetzt, danach rührt man 1 Std. bei Raumtemperatur nach, säuert mit 10 %iger Schwefelsäure an, engt im Vakuum ein. Der Rückstand wird mit Methyl-tert.-butylether und Wasser behandelt. Nach dem Einengen der organischen Phase erhält man 54,6 g eines Öls, $n_D^{25}$ : 1,564 0.

Herstellvorschrift C

54,5 g (0,24 Mol) des Produktes aus Herstellvorschrift B löst man in 150 ml absolutem Chloroform, gibt einige Tropfen Dimethylformamid zu und tropft bei Raumtemperatur 41,6 g (0,35 Mol) Thionylchlorid ein, danach wird 1 Std. bei Raumtemperatur und 2 Std. bei 50 °C weitergerührt. Nach dem Einengen im Vakuum erhält man 58,3 g einer fast farblosen Flüssigkeit, $n_D^{23}$ : 1,570 0.

Die folgenden Beispiele erläutern die Herstellung der erfindungsgemäßen Wirkstoffe.

Herstellbeispiel 1

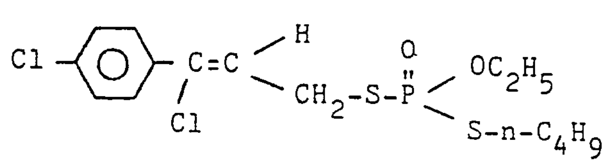

In 100 ml abs. Acetonitril werden bei Raumtemperatur 11,1 g (0,05 Mol) 1-(p-Chlorphenyl)-1-chlor-3-chlorpropen-1 vorgelegt. Es werden 13,6 g (0,0525 Mol) O-ethyl-S-n-butyldithiophosphorsaures Dimethylammoniumsalz, ebenfalls gelöst in Acetonitril, allmählich zugesetzt. Man rührt 8 Std. bei 40 bis 50 °C, behandelt bei Raumtemperatur mit 5 %iger Natriumbicarbonatlösung, nimmt nach dem Einengen in Ether auf, schüttelt 3 mal mit Wasser aus, trocknet, filtriert und engt ein. Man erhält 17,8 g eines gelblichen Öls entsprechend 89 % der berechneten Menge. Die Verbindung ist in der nachstehenden Tabelle 1 als Nr. 14 aufgeführt.

$n_D^{25}$ = 1,585 1.

Analyse :
berechnet : C 45,12 H 5,3 S 16,06 Cl 17,76 P 7,76 O 8,01
gefunden : C 45,4 H 5,3 S 16,0 Cl 18,3 P 7,5 O 7,5

Herstellbeispiel 2

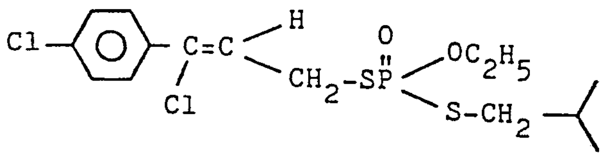

Man verfährt, wie vorstehend beschrieben, unter Einsatz von 11,1 g (0,05 Mol) 1-(p-Chlorphenyl)-1-chlor-3-chlorpropen-1 und 13,6 g (0,0525 Mol) O-ethyl-S-sec-butyl-dithiophosphorsaurem Dimethylammoniumsalz.

Ausbeute : 16,8 g eines gelben Öls entsprechend 84 % der berechneten Menge.

Nach Reinigung an einer Kieselgelsäule (Laufmittel : n-Hexan : Aceton = 8 : 1) erhält man 12,1 g der gewünschten Verbindung. Die Verbindung ist in der nachstehenden Tabelle als Nr. 10 aufgeführt.

$n_D^{25}$ = 1,584 1

Analyse :
berechnet : C 45,12 H 5,3 S 16,06 Cl 17,76 P 7,76 O 8,01
gefunden : C 45,5 H 5,3 S 15,9 Cl 18,4 P 7,1

Tabelle 1 (Wirkstoffe)

Die nachstehenden Verbindungen wurden hergestellt, soweit physikalische Angaben über sie gemacht werden ; Verbindungen, von denen nichts angegeben ist, lassen aufgrund struktureller Ähnlichkeit eine ähnliche Wirkung erwarten.

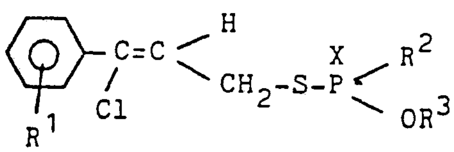

| $R^1$ | X | $R^2$ | $R^3$ | $n_D^{25}$ |
|---|---|---|---|---|
| H | O | sec-$C_4H_9S$- | $C_2H_5$ | 1.5741 |
| H | O | n-$C_3H_7S$- | $C_2H_5$ | 1.5813 |
| H | O | i-$C_4H_9S$- | $C_2H_5$ | 1.5743 |
| H | O | i-$C_3H_7S$- | $C_2H_5$ | 1.5802 |
| H | O | n-$C_5H_{11}S$- | $C_2H_5$ | 1.5702 |
| H | O | i-$C_5H_{11}S$- | $C_2H_5$ | 1.5690 |
| H | O | n-$C_4H_9S$- | $C_2H_5$ | 1.5766 |
| 4-Cl | O | sec-$C_4H_9S$- | $C_2H_5$ | 1.5844 |
| 4-Cl | O | n-$C_3H_7S$- | $C_2H_5$ | 1.5918 |
| 4-Cl | O | i-$C_4H_9S$- | $C_2H_5$ | 1.5841 |
| 4-Cl | O | i-$C_3H_7S$- | $C_2H_5$ | 1.5897 |
| 4-Cl | O | n-$C_5H_{11}S$- | $C_2H_5$ | 1.5767 |
| 4-Cl | O | i-$C_5H_{11}S$- | $C_2H_5$ | 1.5753 |
| 4-Cl | O | n-$C_4H_9S$- | $C_2H_5$ | 1.5851 |
| 4-Cl | S | $C_2H_5O$- | $C_2H_5$ | |
| 4-$CH_3$- | O | n-$C_3H_7S$- | $C_2H_5$ | 1.5788 |
| 4-$CH_3$- | O | i-$C_3H_7NH$- | $C_2H_5$ | 1.5602 |
| 4-t-$C_4H_9$- | S | $C_2H_5O$- | $C_2H_5$ | 1.5710 |

(Fortsetzung)

| $R^1$ | X | $R^2$ | $R^3$ | $n_D^{25}$ |
|---|---|---|---|---|
| 4-t-$C_4H_9$- | S | $CH_3O$- | $CH_3$ | |
| 4-t-$C_4H_9$- | O | n-$C_3H_7S$- | $C_2H_5$ | 1.5683 |
| 4-t-$C_4H_9$- | O | i-$C_3H_7NH$- | $C_2H_5$ | 1.5605 |
| 4-$CH_3O$- | S | $C_2H_5O$- | $C_2H_5$ | |
| 4-$CH_3O$- | O | n-$C_3H_7S$- | $C_2H_5$ | 1.5850 |
| 4-$CH_3O$- | O | i-$C_3H_7NH$- | $C_2H_5$ | 1.5690 |
| 4-t-$C_4H_9$- | O | $C_2H_5O$- | $C_2H_5$ | 1.5457 |
| 3-Br, 4-F | S | $C_2H_5O$- | $C_2H_5$ | 1.5900 |
| 3-Br, 4-F | O | n-$C_3H_7S$- | $C_2H_5$ | 1.5880 |
| 3-Br, 4-F | O | i-$C_3H_7NH$ | $C_2H_5$ | 1.5720 |
| 3,4-$CH_3$ | S | $C_2H_5O$- | $C_2H_5$ | |
| 3,4-$CH_3$ | O | n-$C_3H_7S$- | $C_2H_5$ | |
| 3,4-Cl | S | $C_2H_5O$- | $C_2H_5$ | 1.6015 |
| 3,4-Cl | O | n-$C_3H_7S$- | $C_2H_5$ | 1.5997 |
| 4-$CH_3S$- | S | $C_2H_5O$- | $C_2H_5$ | |
| 4-$CH_3S$- | O | n-$C_3H_7S$- | $C_2H_5$ | |
| 3,4-Cl | O | $C_2H_5O$- | $C_2H_5$ | 1.5748 |
| 3,4-Cl | O | i-$C_3H_7NH$- | $C_2H_5$ | 1.5838 |

Die vorstehend aufgeführten und andere erfindungsgemäße Wirkstoffe werden auf die für Phosphorsäureester übliche Weise angewendet. Formulierungsangaben, anwendungstechnische Hinweise und Angaben über geeignete Mischungspartner zur Erzielung synergistischer und anderer vorteilhafter Wirkungen können beispielsweise der DE-OS 3 039 086 oder der entsprechenden Publikation Nr. 50219 des europäischen Patentamts entnommen werden.

Zur Vorführung der Wirksamkeit der erfindungsgemäßen Wirkstoffe wurden die nachstehend beschriebenen Versuche angestellt; die Wirkstoffe wurden dabei jeweils mit dem bekannt wirksamen Handelsprodukt Chlorphenvinphos

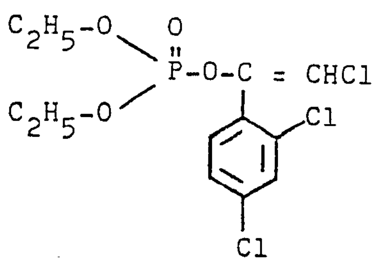

verglichen.

Zuchtversuch mit Stubenfliegen-Larven (Musca domestica)

Je 4,5 ml Magermilch füllt man in 50 ml Penicillingläser und versetzt sie darauf mit 0,5 ml der wäßrigen Wirkstoffaufbereitung. Nach kurzem Mischen fügt man ein Wattebällchen (Firma Hartmann, Maintal) dazu und belegt dieses mit ca. 50 Ei-Larven der Stubenfliege.

Die Gläser lagert man abgedeckt bei Raumtemperatur und beurteilt die Entwicklung nach 7 Tagen.

Ergebnis:

Bei diesem Versuch hatten die Wirkstoffe Nr. 1, 2, 3, 4, 7, 9, 10 der Tabelle in einer Konzentration von 2,5 bis 10 ppm (in der wäßrigen Lösung) je nach Wirkstoff eine bis zu 100 %ige Mortalität zur Folge.

Wirkung auf Spinnmilben (Tetranychus telarius) (Test A)

Getopfte Buschbohnen, die das erste Folgeblattpaar entwickelt haben und einen starken Besatz aller Stadien der Spinnmilbe Tetranychus telarius tragen, werden in der Spritzkabine mit der wäßrigen Wirkstoffaufbereitung tropfnaß gespritzt. Die Pflanzen kommen dazu auf einen Drehteller und werden von allen Seiten mit 50 ml Spritzbrühe besprüht. Der Sprühvorgang dauert ca. 22 Sekunden.

Nach 8 Tagen werden die Pflanzen auf lebende Spinnmilben untersucht.

Bei diesem Versuch hatten die Wirkstoffe Nr. 1, 2, 3, 7, 8, 9, 10 der Tabelle eine 10 %ige Mortalität bei einer Wirkstoffkonzentration von 0,02 % und weniger zur Folge ; das Vergleichsmittel erwies sich als höchstens halb so wirksam.

Wirkung auf Spinnmilben (Tetranychus telarius)
Test B — Residualwirkung

Getopfte Buschbohnen, die das erste Folgeblattpaar entwickelt haben, werden in der Spritzkabine mit der wäßrigen Wirkstoffaufbereitung tropfnaß gespritzt. Die Pflanzen kommen dazu auf einen Drehteller und werden von allen Seiten mit 50 ml Spritzbrühe besprüht. Der Sprühvorgang dauert ca. 20 Sekunden.

Nach 24 Stunden belegt man die Pflanzen mit infizierten Blattstücken, auf denen mindestens 100 Spinnmilben aller Stadien sind.

Nach 8 Tagen beurteilt man den Befall der Pflanzen.

Bei diesem Versuch war eine Konzentration von 0,05 % oder weniger erforderlich, um mit den Verbindungen Nr. 1, 2, 3, 4, 7, 9, 14 der Tabelle absolute Wirkung zu erzielen ; das Vergleichsmittel erwies sich wie im voranstehenden Versuch als höchstens halb so wirksam.

Kontaktwirkung auf Moskito-Larven (Aedes aegypti)

200 ml Leitungswasser werden mit der Wirkstoffaufbereitung versetzt und darauf mit 30 bis 40 Moskito-Larven im 4. Larvenstadium besetzt.

Die Versuchstemperatur beträgt 20 °C. Nach 24 Stunden wird die Wirkung ermittelt.

Bei diesem Versuch wurden alle Verbindungen der Tabelle bis einschließlich Nr. 14 eingesetzt ; sie erzielten in einer Konzentration von 0,02 bis 0,25 ppm eine bis zu 5 mal stärkere Wirkung als das Vergleichsmittel.

Plutella maculipennis, Kohlschaben-Raupen
Fraß- und Kontaktwirkung

Blätter von jungen Kohlpflanzen werden 3 Sekunden in die wäßrige Wirkstoffemulsion getaucht und nach kurzem Abtropfen auf einen angefeuchteten Filter in eine Petrischale gelegt. Das Blatt wird darauf mit 10 Raupen des 4. Stadiums belegt.

Nach 48 Stunden beurteilt man die Wirkung.

Bei diesem Versuch waren die Wirkstoffe Nr. 1, 2, 3, 8, 9, 10, 14 der Tabelle in Konzentrationen von 0,02 % oder weniger voll wirksam.

Kontaktwirkung auf Stockälchen (Ditylenchus dipsaci)

Jeweils 50 bis 100 aktive Nematoden, aufgeschwemmt in 1 ml Wasser in ein 10 ml Penicillinglas gegeben. Darauf setzt man 1 ml der wäßrigen Aufbereitung des Wirkstoffs zu.

Nach 24 Stunden beurteilt man unter dem Binokular die Aktivität der Nematoden.

Bei diesem Versuch wurde ca. 90 %ige Mortalität mit den Verbindungen Nr. 1, 2, 3, 4, 7, 8, 10, 11, 12, 14 der Tabelle in allen Fällen erzielt ; die Anwendungskonzentration betrug jeweils 10 ppm.

**Patentansprüche**

1. Thiophosphorsäureester der Formel I

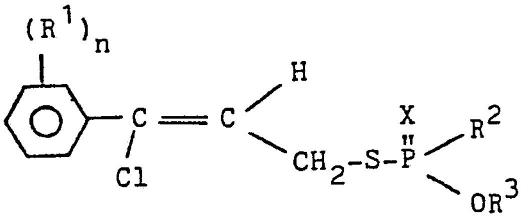

(I)

in der

$R^1$ Wasserstoff oder bis zu 4 (= n) gleiche oder verschiedene Substituenten, nämlich ein Fluor-, Chlor- oder Bromatom, einen geradkettigen oder verzweigten Alkylrest mit bis zu 5 C-Atomen, einen Alkoxyrest mit bis zu 3 C-Atomen oder einen Alkylthiorest mit bis zu 3 C-Atomen,

$R^2$ einen Alkoxy-, Alkylthio- oder Alkylaminorest mit jeweils geradkettigem oder verzweigtem Alkylsubstituenten einer C-Atomzahl von bis zu 5,

$R^3$ einen Alkylrest mit bis zu 3 C-Atomen und

X ein Sauerstoff- oder Schwefelatom bedeuten.

2. Verfahren zur Herstellung von Thiophosphorsäureestern der Formel I, dadurch gekennzeichnet, daß man ein entsprechend substituiertes 1-Phenyl-1,3-dichlor-propen-1 der allgemeinen Formel II

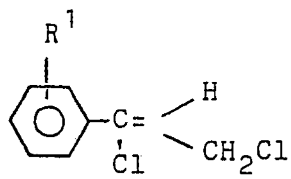

(II)

mit einem thio- oder dithiophosphorsauren Salz der allgemeinen Formel III

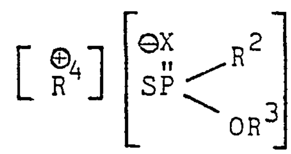

(III)

umsetzt.

3. Schädlingsbekämpfungsmittel, enthaltend einen 3-Chlor-3-phenylprop-2-enylthiophosphorsäureester der Formel I gemäß Anspruch 1.

4. Schädlingsbekämpfungsmittel, enthaltend inerte Zusatzstoffe und einen 3-Chlor-3-phenylprop-2-enylthiophosphorsäureester der Formel I gemäß Anspruch 1.

5. Verwendung von 3-Chlor-3-phenylprop-2-enylthiophosphorsäureester der Formel I gemäß Anspruch 1 zur Bekämpfung von Schädlingen.

6. Verfahren zur Bekämpfung von Schädlingen, dadurch gekennzeichnet, daß man einen 3-Chlor-3-phenylprop-2-enylthiophosphorsäureester der Formel I gemäß Anspruch 1 auf die Schädlinge und/oder deren Lebensraum einwirken läßt.

**Claims**

1. A thiophosphate of the formula I

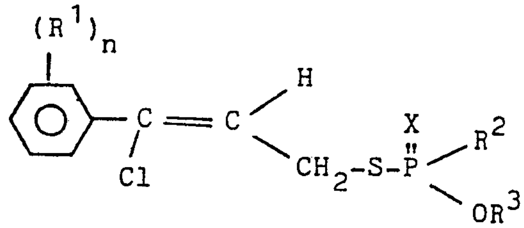

(I)

where

$R^1$ is hydrogen, or up to 4 (= n) identical or different substituents $R^1$ may be present, each of which is fluorine, chlorine or bromine, straight-chain or branched alkyl of up to 5 carbon atoms, alkoxy of up to 3 carbon atoms or alkylthio of up to 3 carbon atoms,

$R^2$ is alkoxy, alkylthio or alkylamino, each of which is substituted by straight-chain or branched alkyl of up to 5 carbon atoms,

$R^3$ is alkyl of up to 3 carbon atoms,

and X is oxygen or sulfur.

2. A process for the manufacture of a thiophosphate of the formula I, wherein an appropriately substituted 1-phenyl-1,3-dichloroprop-1-ene of the general formula II

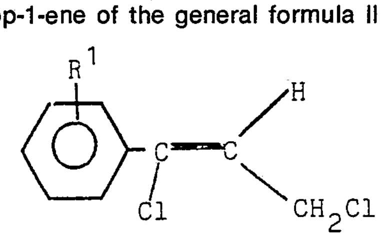

(II)

is reacted with a thio- or dithiophosphate salt of the general formula III

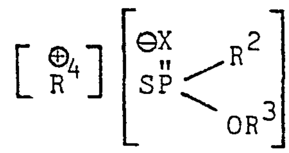

(III)

3. A pesticide containing a 3-chloro-3-phenylprop-2-enylthiophosphate of the formula I as claimed in claim 1.

4. A pesticide containing inert additives and a 3-chloro-3-phenylprop-2-enylthiophosphate of the formula I as claimed in claim 1.

5. The use of 3-chloro-3-phenylprop-2-enylthiophosphates of the formula I as claimed in claim 1 for combating pests.

6. A process for combating pests, wherein a 3-chloro-3-phenylprop-2-enylthiophosphate of the formula I as claimed in claim 1 is allowed to act on the pests and/or their habitat.

**Revendications**

1. Esters d'acide thiophosphorique de formule I

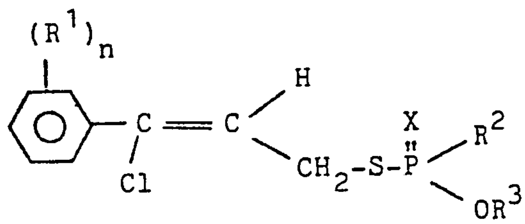

(I)

dans laquelle

$R^1$ représente hydrogène ou jusqu'à 4 (= n) substituants identiques ou différents, à savoir un atome de fluor, chlore ou brome, un reste alkyle linéaire ou ramifié, ayant jusqu'à 5 atomes C, un reste alcoxy ayant jusqu'à 3 atomes C ou un reste alkylthio ayant jusqu'à 3 atomes C.

$R^2$ représente un reste alcoxy, alkylthio ou alkylamino, chacun à substituant alkyle linéaire ou ramifié d'un indice atomique C allant jusqu'à 5,

$R^3$ désigne un reste alkyle ayant jusqu'à 3 atomes C et

X est un atome d'oxygène ou de soufre.

2. Procédé de préparation d'esters d'acide thiophosphorique de formule I, caractérisé par le fait que l'on fait réagir un 1-phényl-1,3-dichloro-propène-1 substitué de manière appropriée, de formule générale II

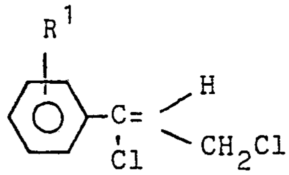

(II)

avec un sel d'acide thio- ou dithiophosphorique de formule générale III

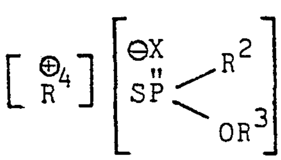

(III)

3. Parasiticide contenant un ester d'acide chloro-3-phényl-3-propène-2-énylthiophosphorique de formule I, selon la revendication 1.

4. Parasiticide contenant des additifs inertes et un ester d'acide chloro-3-phényl-3-propène-2-énylthiophosphorique de formule I, selon la revendication 1.

5. Utilisation d'esters d'acide chloro-3-phényl-3-propène-2-énylthiophosphorique de formule I, selon la revendication 1, pour la lutte contre les parasites.

6. Procédé de lutte contre les parasites, caractérisé par le fait que l'on fait agir sur les parasites et/ou leur biotope un ester d'acide chloro-3-phényl-3-propène-2-énylthiophosphorique de formule I, selon la revendication 1.